# EUROPÄISCHE PATENTSCHRIFT

(11) **EP 0 514 565 B1**
(45) Veröffentlichungstag und Bekanntmachung des Hinweises auf die Patenterteilung: **10.05.1995**
(21) Anmeldenummer: 91108179.2
(22) Anmeldetag: 21.05.1991
(51) Int. Cl.: E05F 11/50, E05F 15/16, F16D 3/70, F16D 7/02, F16H 55/14, F16D 3/50

(54) **Verstellantrieb mit zwei Reibpartnern**
Adjusting drive with two associated friction members
Commande de déplacement avec deux membres associés à friction

(43) Veröffentlichungstag der Anmeldung: 25.11.1992
(73) Patentinhaber: SIEMENS AKTIENGESELLSCHAFT, 80333 München (DE)
(72) Erfinder: Michel, Peter, Dipl.-Ing. (FH), W-8702 Kleinrinderfeld (DE)

(56) Entgegenhaltungen:
- WO-A-86/00380
- DE-U- 8 903 714
- FR-A- 2 193 441
- US-A- 2 479 278

## Beschreibung

Die Erfindung bezieht sich auf einen Kraftfahrzeug-Fensterheberantrieb oder dergleichen gemäß Oberbegriff des Anspruchs 1; ein derartiger Verstellantrieb, insbesondere für einen Kraftfahrzeug-Fensterheberantrieb, ist durch die DE-U-89 03 714 bekannt.

Bei elektromotorischen Fensterheberantrieben wird zur Dämpfung u.a. des schlagartig abgebremsten Antriebsmomentes beim Erreichen des oberen bzw. des unteren Anschlagpunktes des Hebermechanismusses in der Kraftfahrzeugtür eine Gummischeibe als Dämpfungszwischenlage zwischen dem von dem Elektromotor angetriebenen Schneckenzahnrad einerseits und der mit dem Abtrieb des Fensterhebers verbundenen Mitnahmescheibe andererseits eingebaut, die eine gewisse tangentiale Nachgiebigkeit zwischen dem Schneckenrad und der Mitnahmescheibe beim Auflaufen auf den Anschlagpunkt erlaubt. Das Schneckenrad übergreift mit einem topfförmigen Rand den Außenrand der Mitnahmescheibe, derart daß es sich auf diese radial abstützen kann wenn die Verzahnungskräfte der Schneckenwelle auf das Schneckenrad einwirken; bei gleichzeitiger radialer Abstützung und Relativbewegung zwischen dem Schneckenrad einerseits und der Mitnahmescheibe andererseits kann es zu unerwünschten Quietsch-Geräuschen zwischen Schneckenrad und Mitnahmescheibe kommen.

Durch die WO-A-8 600 380 ist es zur Vereinfachung einer Kreuzgelenk-Kraftübertragung zwischen der Lagerschale und einer Gelenkwelle bekannt, anstelle eines üblichen Nadellagers unter Weglassung der Nadeln eine der beiden betriebsmäßig dauernd aufeinander abrollenden Lagerflächen mit einer gewellten Oberfläche zu versehen.

Gemäß Aufgabe der vorliegenden Erfindung sollen bei einem Verstellantrieb der eingangs genannten Art Quietsch-Geräusche zwischen den beiden Randteilen bei einer gegenseitigen Relativbewegung beim Auflaufen auf den Anschlagpunkt mit einfachen konstruktiven und montagetechnischen Mitteln und unter Berücksichtigung auch langer Betriebsstandzeiten vermieden werden können; die Lösung dieser Aufgabe gelingt erfindungsgemäß bei einem Verstellantrieb der eingangs genannten Art durch die Lehre des Anspruchs 1; vorteilhafte Ausgestaltungen der Erfindung sind jeweils Gegenstand der Unteranprüche.

Es hat sich in überraschender Weise gezeigt, daß durch die erfindungsgemäßen Ausnehmungen im Bereich der radialen Vertiefungen und die lediglich nunmehr vorhandene Anlage im Bereich der radialen Erhebungen mit einer entsprechenden Verringerung der Anlagefläche zwischen den beiden Randflächen ohne Beeinträchtigung der sonstigen Betriebseigenschaften Quietschgeräusche bei Relativbewegungen zwischen den Randflächen vermeidbar sind; es kann im allgemeinen auf eine gesonderte, in den bekannten Fällen bisher notwendige Schmierung verzichtet werden. Falls, insbesondere unter Berücksichtigung besonders langer Betriebsstandzeiten und rauher Betriebsbedingungen, eine Schmierung durch ein Schmiermittel erfolgt, werden nach einer Ausgestaltung der Erfindung die radialen Vertiefungen als Schmiermittel-Depottaschen vorgesehen, derart daß ein unerwünschtes Wegdrücken des Schmiermittels verhindert und im Gegensatz dazu erreicht wird, daß bei jeder Relativbewegung zwischen den Reibpartnern durch die entsprechend gestalteten Ausnehmungen in Form der radialen Vertiefungen wieder Schmierstoff zwischen die beiden Reibpartner gefördert wird.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen
- FIG 1: in einem axialen Längs-Teilschnitt den grundsätzlichen Aufbau einer elektromotorischen Seilfensterheber-Antriebseinheit
- FIG 2: die Anordnung gemäß FIG 1 im Schnittverlauf II-II
- FIG 3: eine axiale Draufsicht auf die äußere Stirnseite der am Außenumfang gewellten Mitnahmescheibe mit übergreifendem Schneckenrad.
- FIG 4: eine axiale Draufsicht auf das am Innenumfang ihres topfförmigen Randes gewellte Schneckenrad und die axial übergriffene Mitnahmescheibe.

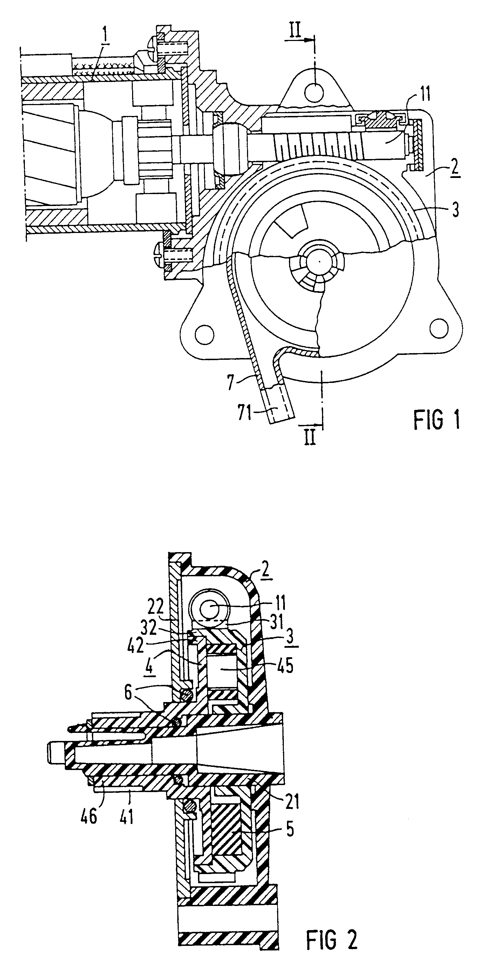

Figur 1 zeigt in einem axialen Längs-Teilschnitt den Prinzipaufbau einer elektromotorischen Kraftfahrzeug-Seilfensterheberantriebseinheit mit einem nur schematisch angedeuteten elektrischen Kommutator-Antriebsmotor 1, dessen verlängerte Rotorwelle als Schneckenwelle 11 in ein an das Gehäuse des elektrischen Antriebsmotors 1 angeflanschtes topfförmiges Getriebegehäuse 2 ragt und mit einem Schneckenrad 3 im Getriebegehäuse 2 kämmt; das Schneckenrad 3 steht in Mitnahmeverbindung mit einer Seilscheibe in einem Seilscheibengehäuse 7, das mit dem Getriebegehäuse 2 verschraubt ist und Seilausgangsöffnungen 71 für zu einem Fensterscheibenhebermitnehmer führende Seilzüge aufweist.

Wie insbesondere aus Figur 2 ersichtlich, ist das als Antriebsscheibe dienende, von der Schneckenwelle 11 angetriebene Schneckenrad 3 drehbar auf einem Lagerbolzen 21 gelagert, der mit seinem rechten getriebeseitigen Ende in den Topfboden des Getriebegehäuses 2 übergeht und mit diesem als einstückiges, insbesondere Kunststofformteil ausgebildet ist. Zur Drehmitnahme zwischen dem Schneckenrad 3 und der in Figur 2 nicht dargestellten Seilscheibe dient eine ebenfalls auf dem Lagerbolzen 21 drehbar gelagerte Mitnahmescheibe 4 mit einem axial vorstehenden freien Wellenbund 46, der über seinen Umfang mit einer Kerb-Außenverzahnung 41 versehen ist, auf den die Seilscheibe mit einer korrespondierenden KerbInnenverzahnung aufsteckbar ist. Das Getriebegehäuse 2 ist durch einen Getriebegehäusedeckel 22 verschlossen. Zur feuchtigkeitsdichten Abdichtung zwischen dem Getriebegehäusedeckel 22 einerseits und dem Getriebegehäuse 2 andererseits sowie dem Lagerbolzen 21 einerseits und dem Wellenbund 46 andererseits dient jeweils ein Dichtring 6 in Form eines O-Ringes.

Zur Drehmitnahme zwischen dem auf dem Lagerbolzen 21 drehbaren Schneckenrad 3 und der dazu konzentrischen, ebenfalls auf dem Lagerbolzen 21 drehbar gelagerten konzentrischen Mitnahmescheibe 4 weist diese über ihren Umfang verteilt angeordnete, axial vorstehende Mitnahmenocken 43 auf, die in korrespondierende Mitnahmetaschen einer Dämpfungszwischenlage 5 eingreifen, die ihrerseits in Umfangsrichtung formschlüssig gegenüber dem Schneckenrad 3 gehalten ist. Das Schneckenrad 3 übergreift mit einem topfförmigen Randteil 32 sowohl die Dämfungszwischenlage 5 als auch die Mitnahmescheibe 4, derart daß sich das Getrieberad 3 entgegen den von der Schneckenwelle 11 auf seine Verzahnung einwirkenden Kräften auf dem Außen-Randteil 42 der Mitnahmescheibe 4 radial abstützen kann.

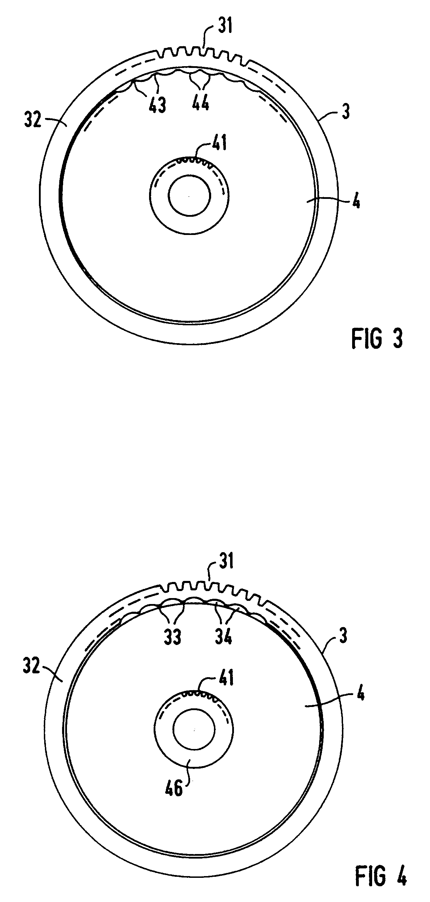

Die zumindest tangential elastische Dämpfungszwischenlage 5 erlaubt eine gewisse tangentiale Relativbewegung zwischen dem Schneckenrad 3 einerseits und der Mitnahmescheibe 4 andererseits beim Auflaufen auf einen Anschlagpunkt ; damit dabei Quietschgeräusche zwischen dem topfförmigen Randteil 32 und dem Außen-Randteil 42 vermieden werden können, ist erfindungsgemäß gemäß Figur 3 bzw.4 jeweils entweder der AußenRandteil 42 der Mitnahmescheibe 4 gemäß Figur 3 oder der topfförmige Randteil 32 des Schneckenrades 3 gemäß Figur 4 an seiner Innenumfangsfläche derart wellenförmig gezahnt, daß eine Abstützung nur zwischen den radialen Erhebungen 43 der Mitnahmescheibe 4 und der dann ebenen Innenumfangsfläche des topfförmigen Randteils 32 des Schneckenrades 3 bzw. zwischen den radialen Erhebungen 33 des Schneckenrades 3 und der dann ebenen Außenumfangsfläche des Außen-Randteils 42 der Mitnahmescheibe 4 gegeben ist und die zwischen den radialen Erhebungen 33 verbleibenden radialen Vertiefungen 34 bzw. die zwischen den radialen Erhebungen 43 verbleibenden Vertiefungen 44 in vorteilhafter Weise als Schmiermittel-Depoträume vorgesehen werden können.

## Patentansprüche

1. Kraftfahrzeug-Fensterheberantrieb oder dergleichen, mit einem auf einer Lageraufnahme, insbesondere Lagerbolzen, gelagerten Zahnrad, insbesondere Schneckenrad 3, und einer über eine zumindest tangential elastische Dämpfungszwischenlage (5) angetriebenen, dazu konzentrischen Mitnahmescheibe (4), wobei das Zahnrad sich mit einem topfförmigen Randteil (32) auf einem Außen-Randteil (42) radial abstützt und dabei die Randteile als gegenseitige Reibpartner entsprechend der tangentialen Nachgiebigkeit der Dämpfungszwischenlage relativ zueinander bewegbar sind, **dadurch gekennzeichnet,** daß zur Vermeidung von Quietschgeräuschen jeweils der eine Randteil (32 bzw. 42) eine ebene Randfläche und der andere Randteil (42 bzw. 32) eine dazu unebene Randfläche mit an der einen Randfläche nur anliegenden Erhebungen (33 bzw. 43) mit dazwischen liegenden Vertiefungen (44 bzw. 34) aufweist.

2. Kraftfahrzeug-Fensterheberantrieb oder dergleichen nach Anspruch 1, **dadurch gekennzeichnet,** daß die radialen Vertiefungen als Schmiermittel-Depottaschen vorgesehen sind.

3. Kraftfahrzeug-Fensterheberantrieb oder dergleichen nach Anspruch 1 und/oder 2, **dadurch gekennzeichnet,** daß das Zahnrad ein mit einer Schneckenwelle (11) angetriebenes Schneckenrad (3) ist und mit seinem topfförmigen Randteil (32) an seinem Außenumfang eine mit der Schneckenwelle (11) kämmende Außenverzahnung (31) aufnimmt sowie an seinem Innenumfang auf dem Außen-Randteil (42) der konzentrisch übergriffenen, mit dem Antrieb des Fensterhebers verbundenen Mitnahmescheibe (4) abgestützt ist und mit dieser über eine zumindest tangential elastische Dämpfungszwischenlage (5) in Mitnahmeverbindung steht, und wobei der Außen-Randteil (42) der Mitnahmescheibe (4) über seinen Umfang wellenförmig gezahnt mit radialen, an dem Innenumfang des topfförmigen Randteils (32) des Schneckenrades (3) anlegbaren Erhebungen (33) mit dazwischen liegenden Vertiefungen (34) ausgebildet ist.

4. Kraftfahrzeug-Fensterheberantrieb oder dergleichen nach Anspruch 1 und/oder 2, **dadurch gekennzeichnet,** daß das Zahnrad ein mit einer Schneckenwelle (11) angetriebenes Schneckenrad (3) ist und mit seinem topfförmigen Randteil (32) an seinem Außenumfang eine mit der Schneckenwelle (11) kämmende Außenverzahnung (31) aufnimmt und sich an seinem Innenumfang auf dem Außen-Randteil (42) der konzentrisch übergriffenen, mit dem Antrieb des Fensterhebers verbundenen Mitnahmescheibe (4) abstützt und mit dieser über eine zumindest tangential elastische Dämfpungszwsichenlage (5) in Mitnahmeverbindung steht und wobei der Innenumfang des topfförmigen Randteils (32) des Schneckenrades (3) wellenförmig gezahnt mit radialen, an dem Außen-Randteil (42) der Mitnahmescheibe (4) anlegbaren Erhebungen (43) mit dazwischen liegenden Vertiefungen (44) ausgebildet ist.

## Claims

1. Motor-vehicle window-lifter drive or the like, having a gearwheel, preferably worm wheel (3), mounted on a bearing holder, preferably bearing bolt, and having a slave disc (4) which is driven via an at least tangentially elastic intermediate damping layer (5) and is concentric therewith, the gearwheel being supported radially, by a pot-shaped border part (32), on an exterior border part (42) and, in this arrangement, it being possible for the border parts, as mutual friction partners, to move relative to one another corresponding to the tangential compliance of the intermediate damping layer, characterized in that, in order to avoid squeaking noises, respectively one border part (32 or 42, respectively) exhibits a planar border surface and the other border part (42 or 32) exhibits a border surface which is non-planar with respect to the first and has elevations (33 or 43, respectively) which only butt against the one border surface and has depressions (44 or 34, respectively) located therebetween.

2. Motor-vehicle window-lifter drive or the like according to Claim 1, characterized in that the radial depressions are provided as lubricant-storage pockets.

3. Motor-vehicle window-lifter drive or the like according to Claims 1 and/or 2, characterized in that the gear wheel is a worm wheel (3) which is driven by a worm shaft (11) and which, with its pot-shaped border part (32), receives, on its outer circumference, an outer toothing arrangement (31) meshing with the worm shaft (11) and which, on its inner circumference, is supported on the outer border part (42) of the slave disc (4), gripped concentrically and connected to the drive of the window lifter, and which is in slave connection with said slave disc via an at least tangentially elastic intermediate damping layer (5), and the outer border part (42) of the slave disc (4), toothed in an undulate manner over its circumference, being designed with radial elevations (33) which can butt against the inner circumference of the pot-shaped border part (32) of the worm wheel (3) and has depressions (34) located therebetween.

4. Motor-vehicle window-lifter drive or the like according to Claims 1 and/or 2, characterized in that the gear wheel is a worm wheel (3) which is driven by a worm shaft (11) and which, with its pot-shaped border part (32), receives, on its outer circumference, an outer toothing arrangement (31) meshing with the worm shaft (11) and which, on its inner circumference, is supported on the outer border part (42) of the slave disc (4), gripped concentrically and connected to the drive of the window lifter, and which is in slave connection with said slave disc via an at least tangentially elastic intermediate damping layer (5), and the inner circumference of the pot-shaped border part (32) of the worm wheel (3), toothed in an undulate manner being designed with radial elevations (43) which can butt against the outer border part (42) of the slave disc (4) and has depressions (44) located therebetween.

## Revendications

1. Dispositif d'entraînement de lève-glace de véhicule automobile ou analogue, comportant une roue dentée, notamment une roue à vis sans fin (3), montée sur un logement de palier, notamment un axe de palier, et une poulie d'entraînement (4) entraînée par l'intermédiaire d'une couche intercalaire d'amortissement (5), élastique au moins tangentiellement et concentrique à la roue dentée, la roue dentée prenant appui radialement par une partie marginale en forme de pot (32) sur une partie marginale extérieure (42), et les parties marginales étant déplaçables l'une par rapport à l'autre, en tant que partenaires réciproques dans le frottement, en fonction de la flexibilité tangentielle de la couche intercalaire d'amortissement, caractérisé par le fait que pour éviter des bruits de grincement, respectivement une partie marginale (32 ou 42) possède une surface marginale plane et l'autre partie marginale (42 ou 32) possède une surface marginale non plane, possédant des bossages (33 ou 43) qui s'appliquent uniquement sur l'une des surfaces marginales et entre lesquelles sont intercalés des renfoncements (44 ou 34).

2. Dispositif d'entraînement de lève-glace de véhicule automobile ou analogue suivant la revendication 1, caractérisé par le fait que les renfoncements radiaux sont prévus en tant que poches de dépôt de graisse.

3. Dispositif d'entraînement de lève-glace de véhicule automobile ou analogue suivant la revendication 1 et/ou 2, caractérisé par le fait que la roue dentée est une roue à vis sans fin (3) entraînée par un arbre de vis (11), et reçoit sur sa périphérie extérieure, par sa partie marginale en forme de pot (32), une denture extérieure (31) qui engrène avec l'arbre de vis (11) et prend appui, par sa périphérie intérieure, sur la partie marginale extérieure (42) de la poulie d'entraînement (4), qui s'engage concentriquement par-dessus cette partie marginale et est reliée au dispositif d'entraînement du lève-glace, et est reliée, selon une liaison motrice, à cette poulie par l'intermédiaire d'une couche intercalaire d'amortissement (5) au moins élastique tangentiellement, et que la partie marginale extérieure (42) de la poulie d'entraînement (4) est réalisée en ayant une denture ondulée sur sa périphérie, comprenant des bossages radiaux (33), qui peuvent s'appliquer sur la périphérie intérieure de la partie marginale en forme de pot (32) de la roue à vis sans fin (30) et entre lesquels sont intercalés des renfoncements (34).

4. Dispositif d'entraînement de lève-glace de véhicule automobile ou analogue suivant la revendication 1 et/ou 2, caractérisé par le fait que la roue dentée est une roue à vis sans fin (3) entraînée par un arbre de vis (11), et reçoit sur sa périphérie extérieure, par sa partie marginale en forme de pot (32), une denture extérieure (31) qui engrène avec l'arbre de vis (11) et prend appui, par sa périphérie intérieure, sur la partie marginale extérieure (42) de la poulie d'entraînement (4), qui s'engage concentriquement par-dessus cette partie marginale et est reliée au dispositif d'entraînement du lève-glace, et est reliée, selon une liaison motrice, à cette poulie par l'intermédiaire d'une couche intercalaire d'amortissement (5) au moins élastique tangentiellement, et que la périphérie inférieure de la partie marginale en forme de pot (32) de la roue à vis sans fin (3) est réalisée en ayant une denture de forme ondulée comprenant des bossages radiaux (43) pouvant s'appliquer sur la partie marginale extérieure (42) de la poulie d'entraînement (4) et entre lesquels sont intercalés des renfoncements (44).
